# EUROPEAN PATENT APPLICATION

(11) **EP 4 838 653 A1**
(43) Date of publication of application: **11.11.2026**
(21) Application number: 26175988.0
(22) Date of filing: 30.04.2026
(51) Int. Cl.: H01M 50/186, H01M 50/105, H01M 50/124, H01M 50/126, H01M 50/129, H01M 50/184, H01M 50/193, H01M 50/55

(54) **BATTERY CELL AND METHOD OF MANUFACTURING FOR THE SAME**

(30) Priority: 02.05.2025 KR 20250058381; 13.03.2026 KR 20260045721
(71) Applicant: SK On Co., Ltd., Seoul 03161 (KR)
(72) Inventor: JEON, Jae Hyun, 34124 Daejeon (KR); JANG, Jun Ho, 34124 Daejeon (KR); JEONG, Jun Hui, 34124 Daejeon (KR); CHO, Eun Soo, 34124 Daejeon (KR)
(74) Representative: Stolmár & Partner Patentanwälte PartG mbB

(57) **Abstract**

The present disclosure relates to a battery cell and a method of manufacturing the same. The battery cell according to an embodiment of the present disclosure may include: a cell pouch including an upper case and a lower case accommodating an electrode assembly; an electrode tab protruding from the electrode assembly between the upper case and the lower case; a first insulating coating disposed on a short-side end of the upper case in a direction of the electrode tab; and a second insulating coating disposed on a short-side end of the lower case in a direction of the electrode tab.

## Description

### BACKGROUND OF THE INVENTION

### 1. Field

The present disclosure relates to a battery cell and a method of manufacturing the same.

### 2. Description of the Related Art

The demand for secondary batteries as an energy source to drive various electronic devices such as smartphones, laptops, vehicles, and drones is on the rapid rise. In particular, research on battery cells as secondary batteries for driving vehicles has been actively underway.

Battery cells applied to electric vehicles and the like may be modularized by electrically connecting a plurality of battery cells for high power and large capacity, and an electric vehicle may be equipped with a battery module in which a plurality of such battery cells are arranged to obtain high power.

For example, when a plurality of battery cells are connected in series/parallel to form a battery module, a battery module including at least one battery cell may be formed, and other components may be added using at least one battery module to form a battery pack.

Generally, such a battery cell may include a case accommodating an electrode assembly, an electrode tab protruding from the case at front and rear ends of the case, and a cell pouch formed on an edge of the case.

For example, the cell pouch may include a predetermined metal layer, and such metal layer may be exposed at an end of the cell pouch. When there is electrical connection between the exposed metal layer of the cell pouch and the electrode tab, the cell pouch may have electrical potential, which may cause the cell pouch to corrode and reduce the lifespan of the battery cell.

Therefore, there is a need to develop a battery cell and a method of manufacturing the same, capable of preventing electrical connection between the metal layer of the cell pouch and the electrode tab.

### SUMMARY OF THE INVENTION

According to an aspect of the present disclosure, the present disclosure aims to provide a battery cell and a method of manufacturing the same, capable of improving an insulation performance.

According to another aspect of the present disclosure, the present disclosure aims to provide a battery cell and a method of manufacturing the same, capable of improving durability.

According to another aspect of the present disclosure, the present disclosure aims to improve a process efficiency in the manufacturing of a battery cell.

To accomplish the technical objects described above, the present disclosure may provide a battery cell and a method of manufacturing the same.

A battery cell according to an embodiment of the present disclosure may include: a cell pouch including an upper case and a lower case accommodating an electrode assembly; an electrode tab protruding from the electrode assembly between the upper case and the lower case; a first insulating coating disposed on a short-side end of the upper case in a direction of the electrode tab; and a second insulating coating disposed on a short-side end of the lower case in a direction of the electrode tab.

In an embodiment of the present disclosure, the upper case and the lower case may include an aluminum layer interposed between a first polymer layer and a second polymer layer, respectively.

In an embodiment of the present disclosure, the first insulating coating and the second insulating coating may be formed of an insulating material.

In an embodiment of the present disclosure, the first insulating coating and the second insulating coating may be formed by curing the insulating material.

In an embodiment of the present disclosure, the first insulating coating may be disposed at a position corresponding to the upper case and the electrode tab, wherein the second insulating coating may be disposed at a position corresponding to the lower case and the electrode tab.

In an embodiment of the present disclosure, the first insulating coating and the second insulating coating may be formed as a single unit at a portion except a position corresponding to the upper case and the lower case and the electrode tab.

In another embodiment of the present disclosure, at a position corresponding to the upper case and the electrode tab, a first sealant layer may be interposed between the upper case and the electrode tab, wherein, at a position corresponding to the lower case and the electrode tab, a second sealant layer may be interposed between the lower case and the electrode tab.

In another embodiment of the present disclosure, the first insulating coating may be disposed on a short-side end of the upper case and an end of the first sealant layer, wherein the second insulating coating may be disposed on a short-side end of the lower case and an end of the second sealant layer.

In another embodiment of the present disclosure, widths of the first sealant layer and the second sealant layer may be greater than a width of the electrode tab.

In another embodiment of the present disclosure, the upper case may further include a long-side end and a first connection connecting the long-side end and a short-side end of the upper case, wherein the lower case may further include a long-side end and a second connection connecting the long-side end and a short-side end of the lower case, wherein the first insulating coating may extend to the first connection, and wherein the second insulating coating may extend to the second connection.

In another embodiment of the present disclosure, a method of manufacturing a battery cell may include: preparing an electrode assembly including an electrode tab; accommodating the electrode assembly in an accommodating space formed by an upper case and a lower case and positioning the electrode tab between the upper case and the lower case; sealing the upper case and the lower case; spraying, in a direction of the electrode tab, an insulating coating liquid to a short-side end of the upper case and a short-side end of the lower case; and curing the insulating coating liquid to form a first insulating coating and a second insulating coating.

In another embodiment of the present disclosure, the spraying the insulating coating liquid may include: disposing an upper guide on the upper case; disposing a lower guide on the lower case; and spraying, in a space between the upper guide and the lower guide, the insulating coating liquid.

In another embodiment of the present disclosure, the upper guide and the lower guide may be films adhered to the upper case and the lower case, respectively.

In another embodiment, a distance by which the upper guide and the lower guide are spaced apart from each other may increase in a direction of the electrode tab.

In another embodiment of the present disclosure, the upper guide may include a first flat portion parallel to the upper case and a first inclined portion extending from the first flat portion and inclined with respect to the upper case, wherein the lower guide may include a second flat portion parallel to the lower case and a second inclined portion extending from the second flat portion and inclined with respect to the lower case.

In another embodiment of the present disclosure, a distance by which the first inclined portion and the second inclined portion are spaced apart from each other may increase in a direction of the electrode tab.

According to an embodiment of the present disclosure, the insulation performance of a battery cell may be improved.

According to another embodiment of the present disclosure, the durability of the battery cell may be improved.

According to another embodiment of the present disclosure, the process efficiency in the manufacturing process of the battery cell may be improved.

The battery cell and a method of manufacturing the same according to the present disclosure may be widely applied in the field of electric vehicles, battery charging stations, energy storage systems (ESS), and other green technologies such as photovoltaics and wind power utilizing batteries.

The battery cell and the method of manufacturing the same according to the present disclosure may also be used in eco-friendly mobility, including electric vehicles and hybrid vehicles to prevent climate change by reducing air pollution and greenhouse gas emissions.

### BRIEF DESCRIPTION OF THE DRAWINGS

Fig. 1 is a perspective view to schematically illustrate a battery cell according to an embodiment of the present disclosure.
Fig. 2 is an exploded perspective view to schematically illustrate a battery cell according to an embodiment of the present disclosure.
Fig. 3 is a cross-sectional view along line A-A of Fig. 1 to schematically illustrate a battery cell according to an embodiment of the present disclosure.
Fig. 4 is a perspective view to schematically illustrate a first insulating coating and a second insulating coating of a battery cell according to an embodiment of the present disclosure.
Fig. 5 is a perspective view to schematically illustrate a battery cell according to another embodiment of the present disclosure.
Fig. 6 is a cross-sectional view along line B-B of Fig. 5 to schematically illustrate a battery cell according to another embodiment of the present disclosure.
Fig. 7 is a perspective view to schematically illustrate a battery cell according to another embodiment of the present disclosure.
Figs. 8A to 8E are diagrams to schematically illustrate a manufacturing process of a battery cell according to another embodiment of the present disclosure.
Fig. 9 is a diagram to schematically illustrate an upper guide and a lower guide in a manufacturing process of a battery cell according to another embodiment of the present disclosure.
Fig. 10 is a diagram schematically illustrating a front view in a manufacturing process of a battery cell according to another embodiment of the present disclosure.
Fig. 11 is a diagram schematically illustrating a front view in a manufacturing process of a battery cell according to another embodiment of the present disclosure.

### DETAILED DESCRIPTION

Hereinafter, through an exemplary embodiment of the present disclosure with reference to the attached drawings, a battery cell and a method of manufacturing the same according to an embodiment of the present disclosure will be described.

Before describing, it should be noted that when a part is stated to "include" a component, it is not meant to exclusive of other components, but rather to be further inclusive of other components, unless specifically stated otherwise.

In addition, in various embodiments, components having the same configuration will be described representatively in an embodiment by using the same reference numerals, while another embodiment will be described only with respect to different components.

Structural or functional descriptions of the embodiments set forth in this specification or application are merely illustrative for the purpose of describing embodiments according to the technical concept of this disclosure, embodiments according to the technical concept of the disclosure may be implemented in various forms other than those disclosed in this specification or application, and the technical concept of this disclosure is not to be interpreted as being limited to the embodiments described in this specification or application.

With reference to the following drawings, a battery cell 1 and a method of manufacturing the same according to various embodiments of the present disclosure will be described in more detail.

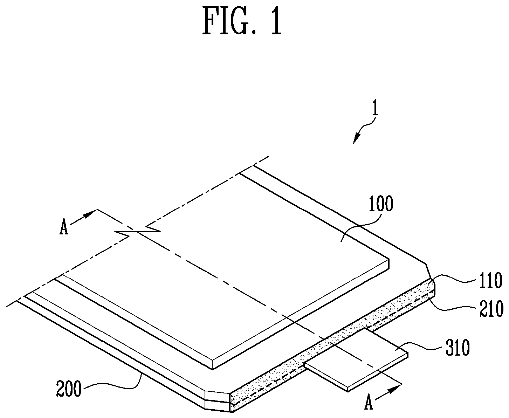

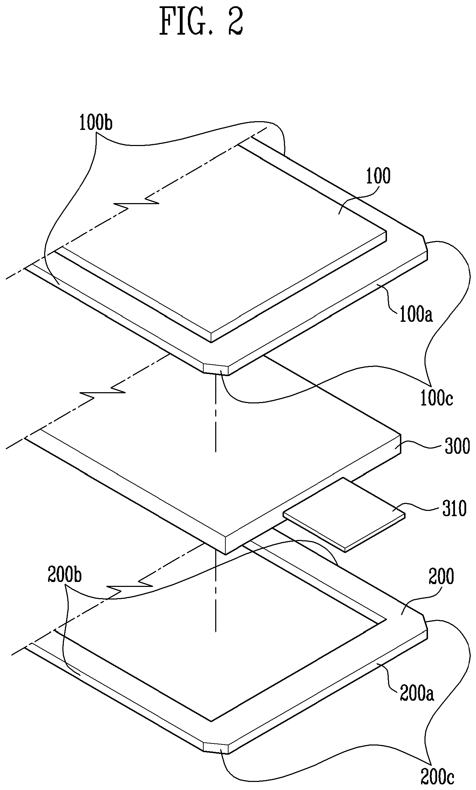

Fig. 1 is a perspective view to schematically illustrate a battery cell 1 according to an embodiment of the present disclosure. Fig. 2 is an exploded perspective view to schematically illustrate a battery cell 1 according to an embodiment of the present disclosure.

The battery cell 1 according to an embodiment of the present disclosure may include: a cell pouch including an upper case 100 and a lower case 200 accommodating an electrode assembly 300; and an electrode tab 310 protruding from the electrode assembly 300 between the upper case 100 and the lower case 200. The battery cell 1 may also include: a first insulating coating 110 disposed on a short-side end 100a of the upper case 100 in a direction of the electrode tab 310; and a second insulating coating 210 disposed on a short-side end 200a of the lower case 200 in a direction of the electrode tab 310.

For example, the battery cell 1 may be a secondary battery capable of being charged and discharged multiple times. For example, the secondary cell may be one of, but not limited to, a lithium cobalt battery, a lithium high-nickel battery, a lithium iron phosphate battery, a lithium ion battery, a lithium polymer battery, a lithium sulfur battery, a nickel-metal hydride battery, a nickel-cadmium battery, a sodium battery, or an all-solid-state battery, or it may be modified in various types of secondary batteries.

Further, the electrode assembly 300 may include a positive electrode plate, a negative electrode plate, and a separator. The cell pouch is for packaging the electrode assembly 300 and may include a laminated sheet including a resin layer and a metal layer.

For example, the upper case 100 and the lower case 200 may be provided vertically such that the electrode assembly 300 is inserted into a space provided between the upper case 100 and the lower case 200.

For example, electrode tab 310 may be electrically connected to the electrode assembly 300. Such electrode tab 310 may be provided in pairs. The battery cell 1 according to an embodiment of the present disclosure may have a structure in which two electrode tabs 310 protrude from both short-side ends of the cell pouch while facing each other.

For example, the upper case 100 and the lower case 200 may be formed to correspond to each other vertically, and may be sealed, such as by thermal fusion. Thereby, the electrical connection between the electrode assembly 300 accommodated within the cell pouch and the outside may be disconnected.

For example, the upper case 100 may include a short-side end 100a and a long-side end 100b, and may include a first connection 100c to which the short-side end 100a and the long-side end 100b are connected. Additionally, the lower case 200 may include a short-side end 200a and a long-side end 200b, and may include a second connection 200c to which the short-side end 200a and the long-side end 200b are connected.

For example, a cell pouch including an upper case 100 and a lower case 200 may accommodate an electrode assembly 300 and an electrolyte together. For example, the electrolyte may include a carbonate-based solvent. For example, the carbonate-based solvent may include dimethyl carbonate (DMC), diethyl carbonate (DEC), dipropyl carbonate (DPC), methylpropyl carbonate (MPC), ethylpropyl carbonate (EPC), methyl ethyl carbonate (MEC) ethylene carbonate (EC), propylene carbonate (PC), butylene carbonate (BC), or the like.

For example, the carbonate-based solvent may easily penetrate between polymers that are spaced apart among polymers, such as polystyrene. Further, for example, the electrolyte may be liquid, solid, or in a gel phase.

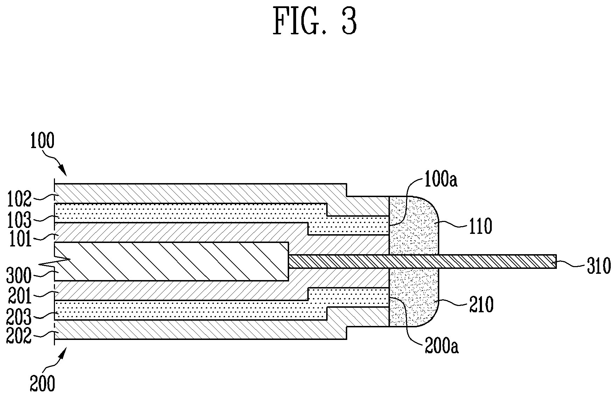

Fig. 3 is a cross-sectional view along line A-A of Fig. 1 to schematically illustrate a battery cell 1 according to an embodiment of the present disclosure.

In an embodiment of the present disclosure, the upper case 100 and the lower case 200 may include aluminum layers 103, 203 interposed between first polymer layers 101, 201 and second polymer layers 102, 202, respectively.

For example, the upper case 100 and the lower case 200 may be formed by sequentially laminating the first polymer layers 101, 201, the aluminum layers 103, 203, and the second polymer layers 102, 202, respectively. The second polymer layers 102, 202 formed on the outermost portion of the battery cell 1 and the first polymer layers 101, 201 formed on the inner side of the battery cell 1 may form an insulating layer. Thus, the aluminum layers 103, 203 formed between the first polymer layers 101, 201 and the second polymer layers 102, 202 may be blocked from being electrically connected with the outside.

For example, in the first polymer layers 101, 201, a polymer material that does not degrade processability during molding of a compartment of the cell pouch may be used. For example, it is desirable that the first polymer layers 101, 201 have low swelling properties without wettability by electrolyte that is injected into the accommodating space of the cell pouch.

For example, it is preferred that the first polymer layers 101, 201 have a relatively low melting point so that they may be bonded at a lower temperature upon sealing the cell pouch. As bondability increases, the sealing strength of the sealing may be improved, and electrolyte penetration may be suppressed.

For example, the aluminum layers 103, 203 may secure the mechanical strength of the upper case 100 and the lower case 200, and may prevent gases and moisture outside the battery cell 1 from entering the battery cell 1. Although the present disclosure describes the aluminum layers 103, 203 as an example, it is possible to employ metal layers using various metallic materials having the aforementioned properties in addition to the aluminum layers 103, 203. For example, in the case of aluminum, it may be advantageous to secure a mechanical strength above a predetermined level while being light in weight, to complement the electrochemical properties of the electrode assembly 300 and the electrolyte, and to improve heat dissipation.

For example, the second polymer layers 102, 202 are formed on the outer side of the aluminum layers 103, 203, composed of a material having electrical insulating properties. As used herein, outer side may refer to a portion that is located in a direction opposite to a direction in which the electrode assembly 300 is located, relative to the aluminum layers 103, 203, i.e., in an outward direction of the battery cell 1.

For example, with reference to the upper case 100 shown in Figs. 1 to 3, the outer side of the aluminum layer 103 may refer to the upper side of the aluminum layer 103. Conversely, when referring to the lower case 200, the outer side of the aluminum layer 203 may refer to the lower side of the aluminum layer 203.

For example, the second polymer layers 102, 202 may be provided on an outer side of the battery cell 1 than the aluminum layers 103, 203 to protect the cell from the outside, while allowing the electrode assembly 300 and the aluminum layers 103, 203 to be electrically insulated from the outside.

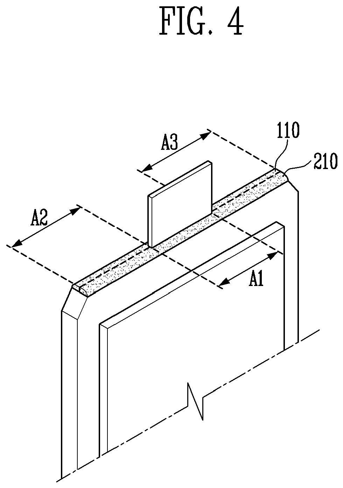

Fig. 4 is a perspective view to schematically illustrate a first insulating coating 110 and a second insulating coating 210 of a battery cell 1 according to an embodiment of the present disclosure.

In an embodiment of the present disclosure, the first insulating coating 110 and the second insulating coating 210 may be formed of an insulating material. The first insulating coating 110 and the second insulating coating 210 may be formed by curing the insulating material.

For example, the upper case 100 and the lower case 200 may be manufactured via a cutting process, wherein, by the cutting process, at the short-side ends 100a, 200a of the upper case 100 and the lower case 200 or the first and second connections 100c, 200c, the aluminum layers 103, 203 formed between the first polymer layers 101, 201 and the second polymer layers 102, 202 may be exposed to the outside.

For example, between the aluminum layers 103, 203 that are exposed to the side and the electrode tab 310, electrical connection may occur between the aluminum layers 103, 203 and the electrode tab 310 when unintended moisture or impurities are introduced. For example, upon electrical connection occurring between the aluminum layers 103, 203 and the electrode tab 310, corrosion of the aluminum layers 103, 203 may occur due to a potential difference between the aluminum layers 103, 203 and the electrode tab 310.

Furthermore, for example, during the manufacturing process of the battery cell 1, due to impact or vibration, the short-side ends 100a, 200a of the upper case 100 and the lower case 200 adjacent to the electrode tab 310 may be bent, and the short-side ends 100a, 200a of the upper case 100 and the lower case 200 may come in contact with the electrode tab 310. In the event of unintended contact of the electrode tab 310 with the short-side ends 100a, 200a of the upper case 100 and lower case 200, electrical connection may occur between the aluminum layers 103, 203 and the electrode tab 310. For example, upon electrical connection between the aluminum layers 103, 203 and the electrode tab 310, corrosion of the aluminum layers 103, 203 may occur due to a potential difference between the aluminum layers 103, 203 and the electrode tab 310.

As described above, due to higher potential of the aluminum layers 103, 203 compared to the electrode tab 310, for example, in the case where the aluminum layers 103, 203 come in contact with the electrolyte as the first polymer layers 101, 201 are damaged, a reduction reaction may occur at the interface of the aluminum layers 103, 203 and the electrolyte, which may cause the aluminum layers 103, 203 to corrode.

Therefore, a first insulating coating 110 or a second coating may be formed at an end of the aluminum layers 103, 203 to electrically insulate the end of the aluminum layers 103, 203.

For example, the first insulating coating 110 may be disposed on the short-side end 100a of the upper case 100 in a direction facing the electrode tab 310. Additionally, the second insulating coating 210 may be disposed on the short-side end 200a of the lower case 200 in a direction facing the electrode tab 310.

For example, the first insulating coating 110 may be disposed to wrap around the entire short-side end 100a of the upper case 100, i.e., the first polymer layer 101, the aluminum layer 103, and the second polymer layer 102 of the upper case 100. For example, the second insulating coating 210 may be arranged to wrap around the entire short-side end 200a of the lower case 200, i.e., the first polymer layer 201, the aluminum layer 203, and the second polymer layer 202 of the lower case 200.

Thus, through the first insulating coating 110 and the second insulating coating 210, the short-side end 100a of the upper case 100 and the short-side end 200a of the lower case 200 may not be in electrical contact with the electrode tab 310, respectively. Furthermore, even when unintended moisture or impurities are introduced between the short-side end 100a of the upper case 100 and the short-side end 200a of the lower case 200 and the electrode tab 310, the short-side end 100a of the upper case 100 and the short-side end 200a of the lower case 200 may not be electrically connected to the electrode tab 310, respectively.

For example, the first insulating coating 110 and the second insulating coating 210 may utilize an insulating material that may be cured by ultraviolet light in an initial liquid state. The shape of the insulating material in the liquid state may not be limited, which may reduce the difficulty in positioning the first insulating coating 110 and the second insulating coating 210 on the short-side ends 100a, 200a of the upper case 100 and the lower case 200.

For example, the first insulating coating 110 and the second insulating coating 210 may utilize a paint-based materials, such as epoxy, silicone, urethane, or the like, and for example, the first insulating coating 110 and the second insulating coating 210 may utilize an acrylic martials. For example, the first insulating coating 110 and the second insulating coating 210 may use a liquid material having a predetermined viscosity that may be cured by ultraviolet light.

In an embodiment of the present disclosure, the first insulating coating 110 may be disposed at a position corresponding to the upper case 100 and the electrode tab 310, and the second insulating coating 210 may be disposed at a position Al corresponding to the lower case 200 and the electrode tab 310. Furthermore, the first insulating coating 110 and the second insulating coating 210 may be formed as a single unit in portions A2, A3 excluding the position corresponding to the upper case 100 and the lower case 200 and the electrode tab 310.

For example, the first insulating coating 110 and the second insulating coating 210 may be disposed only in the portion where the electrode tab 310 is located. Thus, at the portion where the electrode tab 310 is located, the short-side ends 100a, 200a of the upper case 100 and the lower case 200 may be prevented from contacting or electrically connecting with the electrode tab 310.

For example, the first insulating coating 110 and the second insulating coating 210 may be disposed across the short-side ends 100a, 200a of the upper case 100 and the lower case 200, respectively. As described above, as the first insulating coating 110 and the second insulating coating 210 use a viscous liquid material, the liquid first insulating coating 110 and the liquid second insulating coating 210 may form a single unit, in a portion except for an area that is physically separated by the electrode tab 310.

Thus, the liquid first insulating coating 110 and the liquid second insulating coating 210, which form a single unit, may be cured with ultraviolet light to form a single unit.

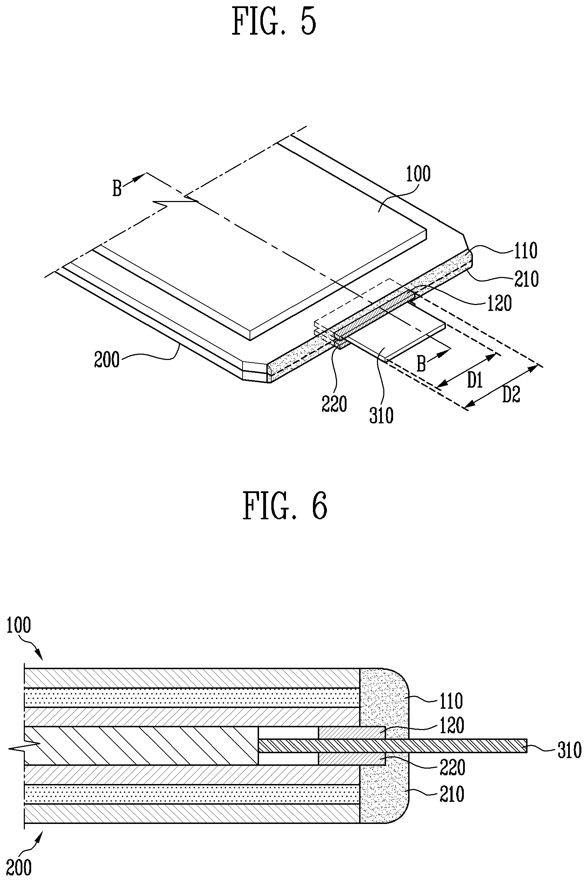

Fig. 5 is a perspective view to schematically illustrate a battery cell 1 according to another embodiment of the present disclosure. Fig. 6 is a cross-sectional view along line B-B in Fig. 5 to schematically illustrate a battery cell 1 according to another embodiment of the present disclosure.

In another embodiment of the present disclosure, at a position corresponding to the upper case 100 and the electrode tab 310, a first sealant layer 120 may be interposed between the upper case 100 and the electrode tab 310, and at a position corresponding to the lower case 200 and the electrode tab 310, a second sealant layer 220 may be interposed between the lower case 200 and the electrode tab 310. Furthermore, the first insulating coating 110 may be disposed on the short-side end 100a of the upper case 100 and the end of the first sealant layer 120, and the second insulating coating 210 may be disposed on the short-side end 200a of the lower case 200 and the end of the second sealant layer 220.

For example, the battery cell 1 according to another embodiment of the present disclosure may further include the first sealant layer 120 and the second sealant layer 220 between a cell pouch and the electrode tab 310, as shown in Figs. 5 and 6.

For example, during the process of sealing the cell pouch, the first sealant layer 120 may further provide adhesion to ensure that the upper case 100 and the electrode tab 310 are sufficiently adhered to each other. In addition, during the process of sealing the cell pouch, the second sealant layer 220 may further provide adhesion to ensure that the lower case 200 and the electrode tab 310 are sufficiently adhered to each other.

For example, the first polymer layer 101 of the upper case 100 and the first polymer layer 201 of the lower case 200 may be made of a polymer material to ensure insulation and adhesion, and the electrode tab 310 may be made of a metallic material to ensure electrical conductivity, which makes it difficult for the upper case 100 and the lower case 200 to fully adhere to the electrode tab 310.

Therefore, by providing the first sealant layer 120 and the second sealant layer 220 between the upper case 100 and the lower case 200 and the electrode tab 310, a complete sealing of the cell pouch may be attained even at the position corresponding to the electrode tab 310. In other words, the first sealant layer 120 may be interposed between the upper case 100 and the electrode tab 310, and the second sealant layer 220 may be interposed between the lower case 200 and the electrode tab 310.

According to another embodiment of the present disclosure, the first insulating coating 110 and the second insulating coating 210 described above may also be applied to the battery cell 1 having the first sealant layer 120 and the second sealant layer 220. For example, the first insulating coating 110 may be disposed simultaneously on the upper case 100 and the end of the first sealant layer 120. Additionally, the second insulating coating 210 may be simultaneously disposed on the lower case 200 and the end of the second sealant layer 220.

In another embodiment of the present disclosure, the widths of the first sealant layer 120 and the second sealant layer 220 may be greater than the width of the electrode tab 310.

As mentioned above, the electrode tab 310 may be made of a metallic material. Therefore, during the process of sealing the cell pouch, the widthwise ends of the electrode tab 310 may damage the first polymer layers 101, 201 of the upper case 100 and the lower case 200. Therefore, the widths of the first sealant layer 120 and the second sealant layer 220 may be set to be greater than the width of the electrode tab 310 to prevent the widthwise ends of the electrode tab 310 from coming in direct contact with the first polymer layers 101, 201 of the upper case 100 and the lower case 200.

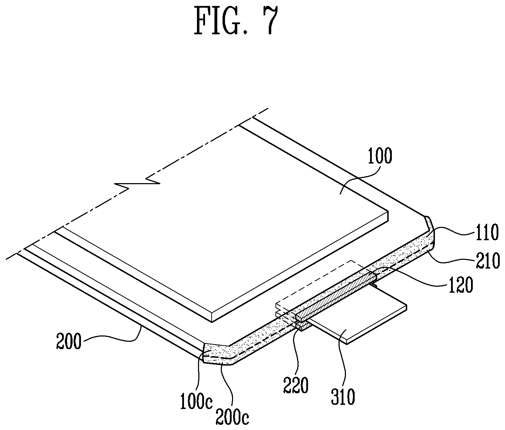

Fig. 7 is a perspective view to schematically illustrate a battery cell according to another embodiment of the present disclosure.

In another embodiment of the present disclosure, the upper case 100 may further include a long-side end 100b and a first connection 100c connecting the long-side end 100b and a short-side end 100a of the upper case, and the lower case 200 may further include a long-side end 200b and a second connection 200c connecting the long-side end 200b and the short-side end 200a of the lower case. Further, in the battery cell according to another embodiment of the present disclosure, the first insulating coating 110 may extend to the first connection 100c, and the second insulating coating 210 may extend to the second connection 200c.

For example, as described above, the first insulating coating 110 and the second insulating coating 210, which may be formed on the short-side ends 100a, 200a of the upper case 100 and the lower case 200, may extend to the first connection 100c and the second connection 200c, respectively, where the short-side ends 100a, 200a and the long-side ends 100b, 200b are connected.

Thus, electrical connections with components in contact with the first connection 100c and the second connection 200c that are seated in the battery module (not shown) may be avoided.

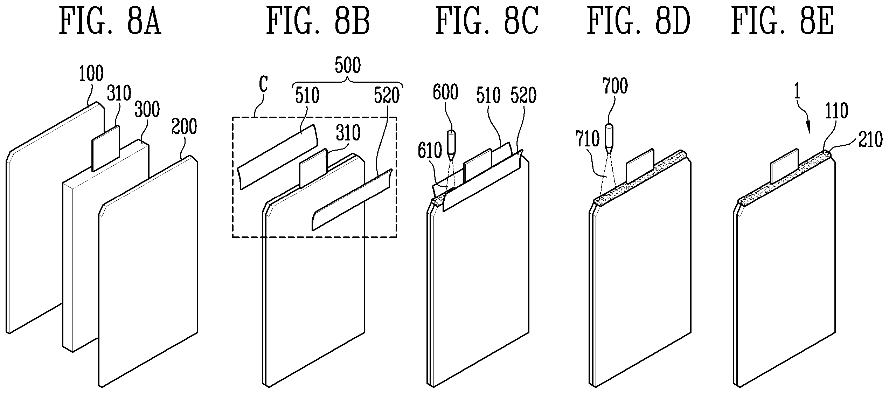

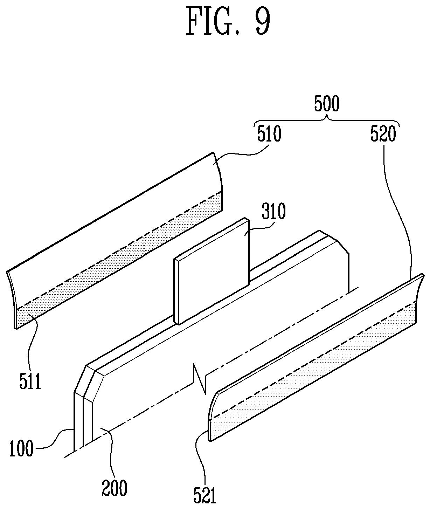

Figs. 8A to 8E are diagrams to schematically illustrate a manufacturing process of a battery cell 1 according to another embodiment of the present disclosure. Fig. 9 is a diagram to schematically illustrate an upper guide 510 and a lower guide 520 in a manufacturing process of a battery cell 1 according to another embodiment of the present disclosure.

In another embodiment of the present disclosure, the present disclosure may provide a method of manufacturing a battery cell 1. The method of manufacturing a battery cell 1, according to another embodiment of the present disclosure, may include: preparing an electrode assembly 300 including an electrode tab 310; accommodating an electrode assembly 300 in an accommodating space formed by an upper case 100 and a lower case 200 and positioning the electrode tab 310 between the upper case 100 and the lower case 200; sealing the upper case 100 and the lower case 200; spraying, in a direction of the electrode tab 310, an insulating coating liquid on a short-side end 100a of the upper case 100 and a short-side end 200a of the lower case 200; and curing the insulating coating liquid to form the first insulating coating 110 and the second insulating coating 210.

In another embodiment of the present disclosure, the spraying the insulating coating liquid may include: disposing an upper guide 510 on the upper case 100; disposing a lower guide 520 on the lower case 200; and spraying, in a space between the upper guide 510 and the lower guide 520, the insulating coating liquid.

For example, as shown in Fig. 8A, the electrode assembly 300 may be accommodated and sealed in a cell pouch including an upper case 100 and a lower case 200. Then, as shown in Fig. 8B, the upper guide 510 and the lower guide 520 may be disposed in the cell pouch in a direction facing the electrode tab 310.

In another embodiment of the present disclosure, the upper guide 510 and lower guide 520 may be release films having adhesive properties.

For example, the release film may be a film that has been cured with a thin coating of a silicone release agent on one or both sides of the film. Thus, it protects the adhesive material and may be easily separated from the adhesive object even after adhesion.

For example, it is possible to form separate adhesive portions 511, 521 on the upper guide 510 and lower guide 520 for adhesion to the cell pouch.

For example, in the adhering the upper guide 510 and lower guide 520 to the cell pouch may be carried out while the release film is adsorbed onto a guide block (not shown). For example, the guide block may include suction holes to adsorb the release film. For example, a vacuum atmosphere may be created through the suction holes to adsorb the release film.

Further, the release film adsorbed onto the guide block may be adhered to the cell pouch including the upper guide 510 and the lower guide 520 via a press, which may prevent leakage of the insulating coating liquid applied in a subsequent process.

Thereafter, as shown in Fig. 8C, an insulating coating liquid may be sprayed by an applicator 600 in a space between the upper guide 510 and the lower guide 520. For example, the applicator 600 may utilize an inkjet nozzle or a spray nozzle. For example, the applicator 600 may adjust an amount of insulating coating liquid sprayed onto an area to be sprayed.

Thereafter, as shown in Fig. 8D, a curer 700 may be used to cure the sprayed insulating coating liquid. For example, the curer 700 may cure only the surface of the sprayed insulating coating liquid via thermal or ultraviolet curing.

For example, ultraviolet curing may cure the surface of the sprayed insulating coating liquid using ultraviolet light having a wavelength of 365 nm, 385 nm, 395 nm, or 405 nm.

Then, as shown in Fig. 8E, the sprayed insulating coating liquid may be dried by hot air to cure the entire insulating coating liquid sprayed, and after completing the curing of the entire insulating coating liquid, the upper guide 510 and the lower guide 520 may be separated from the cell pouch to manufacture the battery cell 1 according to an embodiment of the present disclosure.

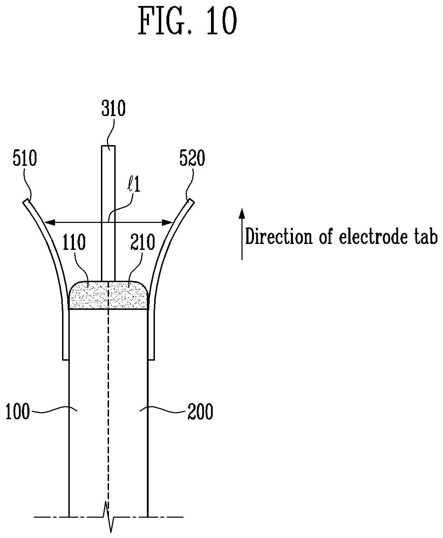

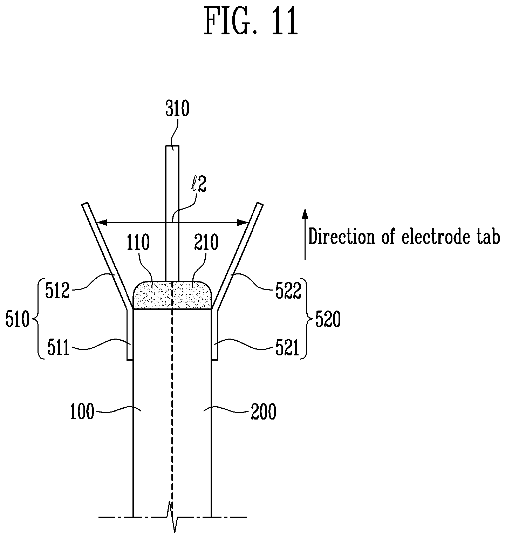

Fig. 10 is a diagram schematically illustrating a front view in a manufacturing process of a battery cell 1 according to another embodiment of the present disclosure. Fig. 11 is a diagram schematically illustrating a front view in a manufacturing process of a battery cell 1 according to another embodiment of the present disclosure.

In another embodiment of the present disclosure, a distance ℓ1 by which the upper guide 510 and the lower guide 520 are spaced apart from each other may increase in a direction of the electrode tab 310.

Further, in another embodiment of the present disclosure, the upper guide 510 may include a first flat portion parallel to the upper case 100 and a first inclined portion 512 extending from the first flat portion and inclined with respect to the upper case 100, and the lower guide 520 may include a second flat portion parallel to the lower case 200 and a second inclined portion 522 extending from the second flat portion and inclined with respect to the lower case 200. In this case, a distance ℓ2 by which the first inclined portion 512 and the second inclined portion 522 are spaced apart from each other may increase in a direction of the electrode tab 310.

For example, as described above, an insulating coating liquid is sprayed in the space between the upper guide 510 and the lower guide 520, and it is necessary to maintain a predetermined volume of the insulating coating liquid until the sprayed insulating coating is cured.

Therefore, by making the distance by which the upper guide 510 and the lower guide 520 are spaced apart from each other to be increased as they move toward the electrode tab 310, thereby securing predetermined spaces.

It is also possible, for example, to divide a flat portion and inclined portions 512, 522 at the upper guide 510 and the lower guide 520 to induce the shape of the insulating coating to a predetermined shape. Furthermore, the adhesive portions 511, 521 may be formed only on the flat portions, such that the time for preparing the upper guide 510 and the lower guide 520 may be reduced, and the difficulty in the process of adhering the upper guide 510 and the lower guide 520 to the cell pouch may be reduced.

Furthermore, it is possible to prevent the upper guide 510 and the lower guide 520 from being separated from the cell pouch due to their own weight.

In view of the foregoing description, it will be understood by those skilled in the art to which the present disclosure pertains that the present disclosure may be practiced in other specific forms without altering the technical ideas or essential features of the present disclosure.

Some of the aspects of the present disclosure are as follows:
Aspect 1: A battery cell comprising: a cell pouch including an upper case and a lower case accommodating an electrode assembly; an electrode tab protruding from the electrode assembly between the upper case and the lower case; a first insulating coating disposed on a short-side end of the upper case in a direction of the electrode tab; and a second insulating coating disposed on a short-side end of the lower case in a direction of the electrode tab.
Aspect 2: The battery cell according to claim 1, wherein the upper case and the lower case include an aluminum layer interposed between a first polymer layer and a second polymer layer, respectively.
Aspect 3: The battery cell according to claim 1 or 2, wherein the first insulating coating and the second insulating coating are formed of an insulating material.
Aspect 4: The battery cell according to claim 3, wherein the first insulating coating and the second insulating coating are formed by curing the insulating material.
Aspect 5: The battery cell according to anyone of preceding claims, wherein the first insulating coating is disposed at a position corresponding to the upper case and the electrode tab, and wherein the second insulating coating is disposed at a position corresponding to the lower case and the electrode tab.
Aspect 6: The battery cell according to claim 5, wherein the first insulating coating and the second insulating coating are formed as a single unit at a portion except a position corresponding to the upper case and the lower case and the electrode tab.
Aspect 7: The battery cell according to anyone of preceding claims, wherein, at a position corresponding to the upper case and the electrode tab, a first sealant layer is interposed between the upper case and the electrode tab, and wherein, at a position corresponding to the lower case and the electrode tab, a second sealant layer is interposed between the lower case and the electrode tab.
Aspect 8: The battery cell according to claim 7, wherein the first insulating coating is disposed on a short-side end of the upper case and an end of the first sealant layer, and wherein the second insulating coating is disposed on a short-side end of the lower case and an end of the second sealant layer.
Aspect 9: The battery cell according to claim 7 or 8, wherein widths of the first sealant layer and the second sealant layer are greater than a width of the electrode tab.
Aspect 10: The battery cell according to claim 9, wherein the upper case further includes a long-side end and a first connection connecting the long-side end and a short-side end of the upper case, wherein the lower case further includes a long-side end and a second connection connecting the long-side end and a short-side end of the lower case, wherein the first insulating coating extends to the first connection, and wherein the second insulating coating extends to the second connection.
Aspect 11: A method of manufacturing a battery cell, comprising: preparing an electrode assembly including an electrode tab; accommodating the electrode assembly in an accommodating space formed by an upper case and a lower case and positioning the electrode tab between the upper case and the lower case; sealing the upper case and the lower case; spraying, in a direction of the electrode tab, an insulating coating liquid to a short-side end of the upper case and a short-side end of the lower case; and curing the insulating coating liquid to form a first insulating coating and a second insulating coating.
Aspect 12: The method according to claim 11, wherein the spraying the insulating coating liquid includes: disposing an upper guide on the upper case; disposing a lower guide on the lower case; and spraying, in a space between the upper guide and the lower guide, the insulating coating liquid.
Aspect 13: The method according to claim 12, wherein the upper guide and the lower guide are films adhered to the upper case and the lower case, respectively.
Aspect 14: The method according to claim 12 or 13, wherein a distance by which the upper guide and the lower guide are spaced apart from each other increases in a direction of the electrode tab.
Aspect 15: The method according to anyone of claims 12 to 14, wherein the upper guide includes a first flat portion parallel to the upper case and a first inclined portion extending from the first flat portion and inclined with respect to the upper case, and wherein the lower guide includes a second flat portion parallel to the lower case and a second inclined portion extending from the second flat portion and inclined with respect to the lower case.

Therefore, it should be understood that the embodiments described above are illustrative in all respects and are not intended to limit the present disclosure to the embodiments described above, and that the scope of the present disclosure is indicated by the patent claims set forth below, rather than the detailed description, and the meaning and scope of the patent claims and all modifications or variations derived from the equivalent concept are to be construed to fall within the scope of the present disclosure.

## Claims

1. A battery cell comprising:
a cell pouch including an upper case and a lower case accommodating an electrode assembly;
an electrode tab protruding from the electrode assembly between the upper case and the lower case;
a first insulating coating disposed on a short-side end of the upper case in a direction of the electrode tab; and
a second insulating coating disposed on a short-side end of the lower case in a direction of the electrode tab.

2. The battery cell according to claim 1, wherein the upper case and the lower case include an aluminum layer interposed between a first polymer layer and a second polymer layer, respectively.

3. The battery cell according to claim 1 or 2, wherein the first insulating coating and the second insulating coating are formed of an insulating material.

4. The battery cell according to claim 3, wherein the first insulating coating and the second insulating coating are formed by curing the insulating material.

5. The battery cell according to anyone of preceding claims, wherein the first insulating coating is disposed at a position corresponding to the upper case and the electrode tab, and
wherein the second insulating coating is disposed at a position corresponding to the lower case and the electrode tab.

6. The battery cell according to claim 5, wherein the first insulating coating and the second insulating coating are formed as a single unit at a portion except a position corresponding to the upper case and the lower case and the electrode tab.

7. The battery cell according to anyone of preceding claims, wherein, at a position corresponding to the upper case and the electrode tab, a first sealant layer is interposed between the upper case and the electrode tab, and
wherein, at a position corresponding to the lower case and the electrode tab, a second sealant layer is interposed between the lower case and the electrode tab.

8. The battery cell according to claim 7, wherein the first insulating coating is disposed on a short-side end of the upper case and an end of the first sealant layer, and
wherein the second insulating coating is disposed on a short-side end of the lower case and an end of the second sealant layer.

9. The battery cell according to claim 7 or 8, wherein widths of the first sealant layer and the second sealant layer are greater than a width of the electrode tab.

10. The battery cell according to claim 9, wherein the upper case further includes a long-side end and a first connection connecting the long-side end and a short-side end of the upper case,
wherein the lower case further includes a long-side end and a second connection connecting the long-side end and a short-side end of the lower case,
wherein the first insulating coating extends to the first connection, and
wherein the second insulating coating extends to the second connection.

11. A method of manufacturing a battery cell, comprising:
preparing an electrode assembly including an electrode tab;
accommodating the electrode assembly in an accommodating space formed by an upper case and a lower case and positioning the electrode tab between the upper case and the lower case;
sealing the upper case and the lower case;
spraying, in a direction of the electrode tab, an insulating coating liquid to a short-side end of the upper case and a short-side end of the lower case; and
curing the insulating coating liquid to form a first insulating coating and a second insulating coating.

12. The method according to claim 11, wherein the spraying the insulating coating liquid includes:
disposing an upper guide on the upper case;
disposing a lower guide on the lower case; and
spraying, in a space between the upper guide and the lower guide, the insulating coating liquid.

13. The method according to claim 12, wherein the upper guide and the lower guide are films adhered to the upper case and the lower case, respectively.

14. The method according to claim 12 or 13, wherein a distance by which the upper guide and the lower guide are spaced apart from each other increases in a direction of the electrode tab.

15. The method according to anyone of claims 12 to 14, wherein the upper guide includes a first flat portion parallel to the upper case and a first inclined portion extending from the first flat portion and inclined with respect to the upper case, and
wherein the lower guide includes a second flat portion parallel to the lower case and a second inclined portion extending from the second flat portion and inclined with respect to the lower case.
